# EUROPEAN PATENT SPECIFICATION

(11) **EP 2 099 695 B1**
(45) Date of publication and mention of the grant of the patent: **14.03.2012**
(21) Application number: 07734077.6
(22) Date of filing: 26.03.2007
(51) Int. Cl.: B65D 77/20, B32B 27/10, B65D 51/24

(54) **COVER FOR CONTAINERS OR PACKAGES OF FOOD PRODUCTS, IN PARTICULAR FOR ICE-CREAMS**
ABDECKUNG FÜR BEHÄLTER ODER VERPACKUNGEN FÜR LEBENSMITTELPRODUKTE, INSBESONDERE FÜR SPEISEEIS
COUVERCLE POUR CONTENEURS OU EMBALLAGES DE PRODUITS ALIMENTAIRES, EN PARTICULIER POUR DES CRÈMES GLACÉES

(30) Priority: 21.12.2006 IT CR20060029
(43) Date of publication of application: 16.09.2009
(73) Proprietor: Guatteri Spa Industria Litografica, 42043 Praticello di Gattatico (IT)
(72) Inventor: CALLONI, Umberto, 42043 Praticello di Gattatico (IT)
(74) Representative: Marcio', Paola
(86) International application number: PCT/IB2007/000748
(87) International publication number: WO 2008/075141

(56) References cited:
- WO-A-97/02181
- WO-A-02/051611
- JP-A- 2004 136 918

## Description

The invention relates to the field of packaging food products for human or animal consumption. More in detail, the invention relates to a cover for closing a container or package of a food product and is aimed particularly (but not exclusively) at packaging ice-creams, puddings, sweet or salted snacks in general.

According to prior art, closing covers for food containers are generally made of paper or cardboard, with a polythene-coated surface in contact with the food product. The name of the product, name of the manufacturer, ingredients, etc... are normally printed on the external surface. A typical example is given by cover discs of ice-cream cones or cups. Metallic or metal-coated covers are also known, which are commonly used e.g. for yoghourts or puddings. A closing cover for food containers is disclosed in JP 2004 136918 A, made of a lid material with a straw piercing property.

Such covers have limits or drawbacks: they easily deteriorate due to the humidity of the food product or humidity of external environment; they are not completely impermeable and therefore difficult to clean; they are not suitable for washing; colours of the external print are not vivid and not very attractive.

Another drawback is that, due to said tendency to deteriorate, they are not suitable to be proposed as collectable items, which would be very interesting from a commercial point of view. A set of different covers to be collected or used as toy figures would be a strong incentive to buy (e.g. for an ice cream product); the non-durable known covers made of cardboard, however, would be completely unsuitable for this purpose.

The invention aims to overcome these limits by making a durable cover for food products that is impermeable, has a pleasant appearance, is also proposable as a collector's item or is usable for an advertising contest.

These objects are achieved with a plane cover for packages of food products, comprising a structure according to claim 1. Preferred embodiments of the cover of the invention are claimed in the remaining claims.

The opaque intermediate layer is preferably made of paper or cardboard; the cover is made of lenticular polyethylene terephthalate (PET) coupled with a cardboard having a lower face coated with glossy polypropylene, thus being adapted to contact food; the layers are preferably joined with a water-based vinyl glue.

Other plastic materials can be used as alternatives to PET, provided that they are suitable for contact with food products.

The upper plastic layer is preferably transfer printed, according to known technique, with a subject selected at will. The print is made more visible by the opaque intermediate layer, which creates a contrast. The upper layer is made of lenticular PET, which enables to create "moving" or iridescent images, giving animation, three-dimensional or zoom effects.

The cover can be made in the form of a disk or any other geometrical or fancy form, for example starting with sheets that are die-cut in the requested format.

The invention has many advantages: the cover is more hygienic than a common cover made of printed cardboard, it is fully impermeable to external humidity, as the face exposed to the environment is made of a plastic material; if necessary, it can be cleaned without being damaged; transfer printing can be used, giving more vivid colours and making the product more attractive.

A particularly important advantage is that the cover, having both the upper and lower faces of a plastic material, is resistant to wear and handling and can be marketed as a collector's item, a promotional gift or a toy. This possibility, which is technically provided by the structure of the cover and suitable materials, has a great commercial interest, especially for products intended for children or teenagers, both for seasonal consumption such as ice-creams, and for yearly consumption such as snacks or the like.

The intermediate layer made of paper or cardboard gives the cover a firmer feeling to the touch, and enables to print also on the rear face of the cover. The plastic film, in fact, prevents the ink from coming into contact with the food product. This further possibility can be exploited for providing e.g a code, a phrase or other information for a prize competition on the back of the cover. This is clearly a further, strong incentive for purchasing the product.

The advantages of the invention will become clearer hereinbelow, where a preferred embodiment is disclosed by way of non-limiting example, and with the help of the figures, where:
Fig. 1 is a cover for food products according to the invention;
Fig. 2 is a general cross section of the cover of Fig. 1, in which the proportions are altered for clarity;
Figs 3 and 4 show two examples of food products, in particular ice-creams, packaged with the cover in Fig. 1.

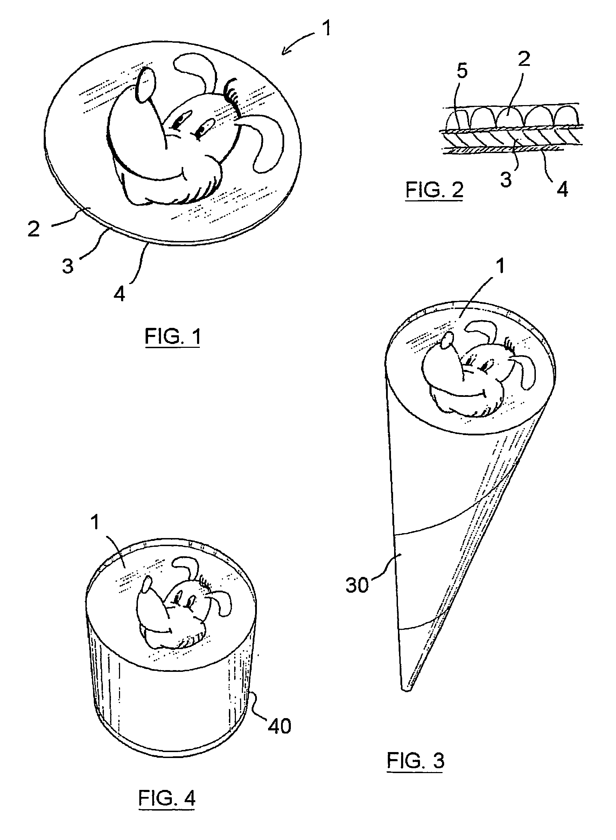

With reference to Fig. 1, there is shown a cover 1 for containers or packages of food products, according to the invention. In fact, there is shown a disk cover for packaging an industrial ice cream cone or cup.

The cover 1 essentially comprises an upper, plastic layer 2 coupled with a cardboard 3, said cardboard 3 having a lower face coated with a plastic film 4.

Referring to Fig. 2, the cover 1 can be realized e.g. with the following materials: the upper plastic layer 2 is made of lenticular PET 75LPI, which is 475 microns thick and comprises a layer 5 that constitutes an offset transfer-printed image; the cardboard 3 is made of 200 g/m² coated paper; the plastic film 4 is made of 12-micron thick glossy polypropylene, previously coupled with the cardboard 3 using water-based vinyl glue.

The coupling between the transfer-printed layer 2 and the cardboard 3 is preferably realized always with water-based vinyl glue.

The cardboard 3 constitutes a contrasting element, for a better view of the printed layer 5; said cardboard 3 also constitutes a further printable support.

Through the upper face of the cover 1, items like brand, information on the product and/or fancy images can be seen by the consumer, as well as characters which are preferably obtained with the above disclosed technique, that is with offset transfer-printing on the lower face of plastic layer 2.

The cover 1 can be made with a variety of subjects, even for the same food product, actually becoming a toy or collectable item that provides an incentive to purchase the product.

Fig. 3, purely by way of example, illustrates an industrial ice-cream cone packaged with a wrapping 30 and with the above disclosed cover 1; Fig. 4 shows an ice-cream product made with a container cup 40, for example made of plastic, and with the same cover 1. Typically, for these uses, the cover 1 has a diameter of approximately 60 mm; total thickness of approximately 670 microns; unitary weight of approximately 2 g.

As clear to those skilled in the art, the invention has been disclosed with reference by way of example to ice-creams, confectioner's custard, snacks and similar products but it is applicable more generally to the packaging of any food product, including food for animals and pet food products, still achieving the advantages that were highlighted above.

## Claims

1. A plane cover for packages of food products, comprising a structure with at least three layers, wherein there is an upper layer (2) of plastic material, an opaque intermediate layer (3), and a bottom layer (4) intended for contact with the food and consisting of a plastic film, **characterized in that** the upper layer (2) is made of lenticular PET and has a thickness of about 475 micron.

2. Cover according to claim 1, **characterized in that** the intermediate layer (3) is made of paper or cardboard and the bottom layer (4) consists of a polypropylene film.

3. Cover according to claim 2, **characterized in that** a water-based vinyl glue is interposed between said upper layer (2) and said intermediate layer (3), and between said intermediate layer (3) and said bottom layer (4).

4. Cover according to any preceding claim, **characterized in that** the upper layer (2) is transfer-printed.

5. A food product for human or animal consumption, in particular an industrial ice-cream or another sweet or salted snack or a pet food product, packaged with a cover according to any previous claim.

## Patentansprüche

1. Ein flacher Deckel für Lebensmittelverpackungen, umfassend eine Struktur mit mindestens drei Schichten, bei der es eine Oberschicht (2) aus Kunststoffmaterial, eine opake Zwischenschicht (3) und eine Unterschicht (4) gibt, die dazu bestimmt ist, mit Lebensmitteln in Berührung zu kommen, und die aus einer Kunststofffolie besteht, **gekennzeichnet dadurch, dass** die Oberschicht (2) aus linsenförmigem PET besteht, und eine Dicke von etwa 475 Mikron aufweist.

2. Deckel nach Anspruch 1, **gekennzeichnet dadurch, dass** die Zwischenschicht (3) aus Papier oder Karton und die Unterschicht (4) aus einer Polypropylenfolie besteht.

3. Deckel nach Anspruch 2, **gekennzeichnet dadurch, dass** ein Vinylkleber auf Wasserbasis zwischen die besagte Oberschicht (2) und die besagte Zwischenschicht (3) sowie zwischen die besagte Zwischenschicht (3) und die besagte Unterschicht (4) eingefügt wird.

4. Deckel nach einem jeden der vorhergehenden Ansprüche, **gekennzeichnet dadurch, dass** die Oberschicht (2) im Transferverfahren bedruckt ist.

5. Ein Lebensmittelprodukt für den menschlichen oder tierischen Verzehr, insbesondere ein industriell hergestelltes Speiseeis oder ein anderer süßer oder salziger Snack oder ein Haustierfuttermittel, verpackt mit einem Deckel nach einem jeden der vorhergehenden Ansprüche.

## Revendications

1. Un couvercle plat pour emballages de produits alimentaires, comprenant une structure avec au moins trois couches, dont une couche supérieure (2) en matériau plastique, une couche intermédiaire opaque (3) et une couche inférieure (4) prévue pour le contact avec les aliments et composée d'un film, **caractérisé par le fait que** la couche supérieure (2) est réalisée en PET lenticulaire et possède une épaisseur d'environ 475 microns.

2. Couvercle selon la revendication 1, **caractérisé par le fait que** la couche intermédiaire (3) est réalisée en papier ou carton et que la couche inférieure (4) se compose d'un film de polypropylène.

3. Couvercle selon la revendication 2, **caractérisé par le fait qu'**une colle vinyle à base d'eau est intercalée entre ladite couche supérieure (2) et ladite couche intermédiaire (3), et entre ladite couche intermédiaire (3) et ladite couche inférieure (4).

4. Couvercle selon l'une des revendications précédentes, **caractérisé par le fait que** la couche supérieure (2) est imprimée par transfert.

5. Un produit alimentaire destiné à la consommation humaine ou animale, en particulier une glace industrielle ou un autre en-cas sucré ou salé ou un produit alimentaire pour animaux, emballé avec un couvercle selon l'une des revendications précédentes.
